# EUROPÄISCHE PATENTSCHRIFT

(11) **EP 3 539 641 B1**
(45) Veröffentlichungstag und Bekanntmachung des Hinweises auf die Patenterteilung: **15.06.2022**
(21) Anmeldenummer: 18400008.1
(22) Anmeldetag: 15.03.2018
(51) Int. Cl.: B01D 53/14, B01D 53/30

(54) **VERFAHREN ZUR NACHBEHANDLUNG VON REGENERIERUNGSABGAS**
METHOD FOR AFTER-TREATMENT OF REGENERATION WASTE GAS
PROCÉDÉ DE TRAITEMENT ULTÉRIEUR DE GAZ D'ÉCHAPPEMENT DE RÉGÉNÉRATION

(43) Veröffentlichungstag der Anmeldung: 18.09.2019
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Gubrinski, Alfred, 64390 Erzhausen (DE); Rappold, Dorit, 60487 Frankfurt am Main (DE); Schmidt, Sophia, 60486 Frankfurt am Main (DE); Strozyk, Michael, 63087 Offenbach (DE)
(74) Vertreter: Dropsch, Holger

(56) Entgegenhaltungen:
- DE-A1-102005 059 101
- DIETMAR WERNER: "Gasreinigungsverfahren für große Wasserstoff-Mengen", CHEMIE INGENIEUR TECHNIK, WILEY VCH. VERLAG, WEINHEIM; DE, Bd. 53, Nr. 2, 1. Januar 1981 (1981-01-01) , Seiten 73-81, XP001350739, ISSN: 0009-286X

## Beschreibung

### Gebiet der Erfindung

Die Erfindung betrifft ein Verfahren zur Nachbehandlung von Gasströmen, in denen unerwünschte, insbesondere schwefelhaltige Komponenten in periodisch oder zeitlich unregelmäßig schwankender Menge und/oder schwankender Konzentration vorhanden sind, mittels eines Absorptions- oder Gaswaschverfahrens. Insbesondere umfasst das Verfahren eine waschmittelbasierte Behandlung eines Regenerierungsabgasstroms, der von einer Adsorptionseinheit freigesetzt wird, wobei der Regenerierungsabgasstrom durch eine zeitliche Schwankung der Menge und/oder Konzentration der unerwünschten Komponente, beispielsweise der Schwefelkomponenten, gekennzeichnet ist.

### Stand der Technik

Die Erdgasqualitäten von Erdgaslagerstätten, die derzeit genutzt werden, werden kontinuierlich schlechter. Daher gewinnt die Befreiung des Erdgases von Spurenverunreinigungen wie z. B. Carbonylsulfid (COS), Quecksilber und insbesondere Mercaptanen, neben der klassischen Abtrennung von Schwefelwasserstoff (H₂S), Kohlendioxid (CO₂) und der Trocknung bzw. Wasserentfernung zunehmend an Bedeutung. Gewöhnlich werden die Wasseranteile und die Mercaptane durch Adsorption an geeigneten Adsorbentien, beispielsweise Molekularsieben, entfernt, was eine periodische Regenerierung der Adsorbentien erfordert. Bei der Regenerierung werden die adsorbierten Spurenbestandteile üblicherweise durch Beaufschlagen der beladenen Adsorbentien mit einem Spülgas derart entfernt, dass durch Desorption bzw. Elution, also Herauslösen während einer kurzen Periode ein hochkonzentrierter Spitzenfluss der Spurenbestandteile im Regenerierungsabgas, also ein sogenannter Peak erzeugt wird, wohingegen während der verbleibenden Regenerierungsdauer, also insbesondere vor und nach der Elution des Peaks, das Regenerierungsabgas viel weniger oder sogar keine Spurenbestandteile mehr enthält.

Das die unerwünschten Spurenbestandteile enthaltende Regenerierungsabgas muss einer Nachbehandlung unterzogen werden, da es so nicht an die Atmosphäre abgegeben werden kann. Um daher die Spurenkomponenten aus dem Regenerierungsabgas wiederzugewinnen, muss die Nachbehandlung des Regenerierungsabgases auch für den hochkonzentrierten Spitzenfluss der Spurenbestandteile ausgelegt werden. In den aus dem Stand der Technik bekannten, kontinuierlich arbeitenden Abgasbehandlungsverfahren erfolgt die Gaswäsche unter Verwendung eines flüssigen Absorptionsmittels oder Waschmittels. Bekannte und häufig angewendete Verfahren dieser Art sind das Rectisol-Verfahren und das Purisol-Verfahren, die beide in Ullmann's Encyclopedia of Industrial Chemistry, 6. Aufl. Bd. 15, S. 399 ff. grundsätzlich beschrieben werden. Diese Verfahren bestehen hauptsächlich aus einem Absorptionsabschnitt und einem Regenerierungsabschnitt, in dem das die Spurenkomponenten enthaltende Abgas freigesetzt wird.

Im Rectisol-Verfahren erfolgt die Aufnahme der oben erwähnten, unerwünschten Störkomponenten durch kaltes, d. h. signifikant unter Umgebungstemperatur abgekühltes Methanol als Absorbens oder Waschmittel, wobei in einer Absorberkolonne, auch als Waschkolonne bezeichnet, ein intensiver Stoffaustausch zwischen dem Rohgas und dem Absorptionsmittel bzw. Waschmittel erfolgt. Dabei erhöht sich die Löslichkeit der unerwünschten Gasbestandteile drastisch mit sinkender Temperatur des Methanols und zunehmendem Druck, während sie für Wasserstoff und Kohlenmonoxid praktisch konstant bleibt. Methanol hat zudem den Vorteil, selbst bei Temperaturen bis hinab zu -75 °C noch eine geringe Viskosität und somit gute Stoff- und Wärmeübertragungseigenschaften aufzuweisen. Das als Waschmittel verwendete, mit den Störkomponenten beladene Methanol wird im Rectisol-Verfahren über Regenerierungsvorrichtungen im Kreis gefahren.

Bei dem Purisol-Verfahren, das ebenfalls ein physikalisches Absorptionsverfahren darstellt, werden die Spurenkomponenten mittels N-Methylpyrrolidon (NMP) als Absorptionsmittel oder Waschmittel bei Umgebungstemperatur oder - in Verbindung mit einer Kälteerzeugungsanlage - bei Temperaturen bis zu - 15 °C absorbiert. Auch bei diesem Gaswäscheverfahren wird das Waschmittel durch Behandlung in einer Regenerierungsanlage durch Erhitzen, Druckentspannung (Flashen) oder Hindurchleiten von Inertgasen (Strippen) regeneriert und zum Absorptionsteil der Anlage zurückgeführt. Typische Arbeitsdrücke und Arbeitstemperaturen beim Purisol-Verfahren liegen zwischen 5 und 80 bar(a) bzw. zwischen 0 und 60° C, teilweise, wie oben ausgeführt, auch darunter. Die Regenerierung des Waschmittels erfolgt durch Entspannung, im Bedarfsfall auch durch Erwärmung. Die dabei abgetriebenen, schwefelhaltigen Komponenten werden in einer Claus-Anlage zu elementarem Schwefel umgesetzt. Das regenerierte physikalische Waschmittel wird erneut der Absorption aufgegeben.

Wenn nicht besondere Maßnahmen getroffen werden, setzt sich der Spurenkomponentenpeak in dem Absorptions- und Regenerationssystem zur Nachbehandlung des Regenerierungsabgases fort. Diese zeitliche Fluktuation der Spurenkomponenten, beispielsweise der Schwefelkomponenten, ist für nachgeschaltete Anlagen oft nicht akzeptabel. So wird im Falle der Abtrennung von Schwefelkomponenten das Abgas aus der Waschmittelregenerierung häufig einer Claus-Anlage zur Schwefelgewinnung zugeführt. Diese kann allerdings zeitlich stark schwankende Konzentrationen der Schwefelkomponenten schlecht verarbeiten, sondern sie benötigt einen zeitlich weitgehend konstanten Zustrom. Einsatzgasströme, die ggf. hinsichtlich der Menge oder der Konzentration der Schwefelkomponenten zeitlichen Schwankungen unterliegen, lassen sich in nachteiliger Weise nicht in einer Claus-Anlage verarbeiten, sondern können nur in einer Fackel verbrannt werden.

Um daher die zeitliche Fluktuation der Spurenkomponenten zu vermeiden oder zumindest zu verringern, wird in der Druckschrift DE 10 2005 059 101 A1 vorgeschlagen, ein Rückhaltegefäß zu installieren, in denen das mit den Spurenkomponenten beladene Absorptionsmittel aus mindestens einem Regenerationszyklus zwischengespeichert und gemischt wird, bevor es zu dem Regenerationsabschnitt geleitet wird. Hierdurch wird eine Glättung des zeitlichen Konzentrationsverlaufs der Spurenkomponenten in dem der nachgeschalteten Anlage zugeführten Abgas erreicht. Nachteilig sind dabei allerdings die großen Volumina des auf die Spitzenkonzentration im Spurenkomponentenpeak ausgelegten Waschmittels, der für die Zwischenspeicherung erforderlichen Behälter sowie die entsprechend großen Kapazitäten der benötigten Fördervorrichtungen, insbesondere Pumpen und Rohrleitungen. Auch der Platzbedarf für die Aufstellung des großen Zwischenbehälters innerhalb der Nachbehandlungsanlage ist oft kritisch.

Der Aufsatz "Gasreinigungsverfahren für große Wasserstoff-Mengen", Dietmar Werner, Chem.-Ing.-Tech. 53 (1981), Nr. 2, S. 73 - 81, beschreibt auf Seite 80 die Reinigung einer großen Menge an Wasserstoff mittels des Druckwechseladsorptionsverfahrens in einer Multibett-Adsorberanlage. Dabei schwanken die Eigenschaften und Zusammensetzungen der bei der Desorption der Verunreinigungen von den Adsorberbetten erhaltenen Abgase periodisch. Dies wird durch Verwendung eines Zweibehältersystems ausgeglichen, wobei der eine Behälter als Puffer bzw. Auffangbehälter fungiert, während der andere Behälter parallel dazu als Mischbehälter arbeitet. Das gelehrte Verfahren bezieht sich auf den zyklischen Betrieb der PSA-Anlage zwischen den Betriebsmodi Adsorption und Desorption - Regeneration. Nicht gelehrt wird dagegen, wie ein Gaswaschverfahren auszugestalten ist, das Abgase mit zeitlich stark schwankenden, peakförmigen Konzentrationsspitzen einer Zielkomponente verarbeiten und dabei kontinuierlich betrieben werden soll, ohne dass zwischen verschiedenen Betriebsmodi gewechselt werden soll.

### Beschreibung der Erfindung

Es ist daher die Aufgabe der vorliegenden Erfindung, die eingangs beschriebenen Verfahren zur Nachbehandlung von Regenerierungsabgasen, die bei der Regenerierung beladener Adsorbentien durch Beaufschlagung mit einem Spülgasstrom erhalten werden, so zu gestalten, dass ein im wesentlichen gleichmäßiger Zufluss des mit Spurenkomponenten, beispielsweise mit schwefelhaltigen Komponenten beladenen, physikalischen Waschmittels zur Waschmittelregenerierung und damit auch ein gleichmäßiger Abfluss der die schwefelhaltigen Komponenten enthaltenden Abgase der Waschmittelregenerierung zu einer nachgeschalteten Anlage, beispielsweise einer Claus-Anlage, gewährleistet ist.

Diese Aufgabe wird im Wesentlichen durch ein Verfahren mit den Merkmalen des Anspruchs 1 gelöst. Weitere, insbesondere bevorzugte Ausgestaltungen des erfindungsgemäßen Verfahrens finden sich in den Unteransprüchen.

Ein Merkmal des erfindungsgemäßen Verfahrens sieht vor, dass der erste Volumenstrom größer als der zweite Volumenstrom ist. Hierdurch steht genau dann eine größere Waschmittelmenge zur Verfügung, wenn der Peak der Zielkomponente, also der zu entfernenden Spurenkomponente, beispielsweise schwefelhaltige Komponenten, in die Gaswaschvorrichtung eintritt. Dies führt zu einer effektiveren Entfernung der Zielkomponente. Andererseits wird die Gaswaschvorrichtung für alle anderen Zeiten, also Zeiten vor tv und nach tn, nur mit einem kleinen Mengenstrom des Waschmittels betrieben. Der Anfall an zu regenerierendem Waschmittel reduziert sich daher im Vergleich mit den aus dem Stand der Technik bekannten Verfahren, insbesondere im Vergleich mit dem in der Druckschrift DE 10 2005 059 101 A1 gelehrten Verfahren erheblich.

Ein weiteres Merkmal des erfindungsgemäßen Verfahrens sieht vor, dass für Zeiten vor tv und nach tn das mit der Zielkomponente beladene Waschmittel aus dem ersten Zwischenbehälter ausgeleitet und in den zweiten Zwischenbehälter eingeleitet wird, wobei der erste Zwischenbehälter mindestens teilweise entleert wird und wobei das Einleiten in den zweiten Zwischenbehälter so erfolgt, dass aus diesem ein Waschmittelstrom mit einer im Vergleich zum Regenerierungsabgasstrom zeitlich weniger schwankenden, bevorzugt zeitlich konstanten Konzentration der Zielkomponente ausgeleitet werden kann. Hierdurch wird der erste Zwischenbehälter für die Aufnahme des beladenen Waschmittels bei Durchlaufen des nächsten Zielkomponentenpeaks durch die Gaswaschvorrichtung vorbereitet. Ferner entsteht in dem zweiten Zwischenbehälter durch Vermischen ein beladenes Waschmittel mit mittlerer, zeitlich weniger schwankender Konzentration der Zielkomponente, das für die Waschmittelregenerierungsvorrichtung und eventuell weiter nachfolgende Behandlungs- oder Verarbeitungsanlagen deutlich besser geeignet ist.

Ein weiteres Merkmal des erfindungsgemäßen Verfahrens sieht vor, dass das mit der Zielkomponente beladene Waschmittel kontinuierlich aus dem zweiten Zwischenbehälter ausgeleitet und in eine Waschmittelregenerierungsvorrichtung eingeleitet wird, wobei aus der Waschmittelregenerierungsvorrichtung ein mindestens teilweise von der Zielkomponente befreites Waschmittel ausgeleitet und zu der Gaswaschvorrichtung zurückgeführt wird und wobei ferner aus der Waschmittelregenerierungsvorrichtung ein die Zielkomponente enthaltender Stoffstrom ausgeitet wird. Auf diese Weise kann das regenerierte Waschmittel wiederverwendet werden und es entsteht ein geschlossener Waschmittelkreislauf. Der aus der Waschmittelregenerierungsvorrichtung ausgeleitete, die Zielkomponente enthaltender Stoffstrom kann einer nachfolgenden Behandlungs- oder Verarbeitungsanlage zugeführt werden.

Im Sinne der vorliegenden Erfindung werden unter Sorptionsmittel alle Mittel verstanden, die es erlauben, die Zielkomponente an ihre Oberfläche (Adsorption) oder in ihr Volumen (Absorption) aufzunehmen und zu binden. Dies können im Falle der Adsorption häufig, aber nicht ausschließlich Feststoffe, im Falle der Absorption Flüssigkeiten sein.

Unter einem Peak im Sinne der vorliegenden Erfindung soll jeder sich zeitlich ändernde Konzentrationsverlauf verstanden werden, der, ausgehend von einem Grundwert oder einer Grundlinie, zunächst einen ansteigenden Verlauf und nachfolgend einen abklingenden Verlauf aufweist und schließlich zum Grundwert oder zu der Grundlinie zurücckehrt oder sich diesem zumindest asymptotisch annähert. Bei der letztgenannten Alternative wird der Fachmann aufgrund seiner Erfahrung eine Festlegung treffen, wann der Grundwert oder die Grundlinie wieder erreicht ist. Die Festlegung der Zeiten tv, tn vor und nach dem Peak kann durch Verfolgen des zeitlichen Konzentrationsverlaufs mit üblichen Analysenmethoden erfolgen. Auf diese Weise können definierte Zeitdauern tv, tn vor und nach Eintreten des Peaks der Zielkomponente in die Gaswaschvorrichtung festgelegt durch entsprechende Routineversuche werden.

Wenn angegeben wird, dass das Einleiten des beladenen Waschmittels vom ersten in den zweiten Zwischenbehälter so erfolgt, dass aus diesem ein Waschmittelstrom mit einer im Vergleich zum Regenerierungsabgasstrom zeitlich weniger schwankenden, bevorzugt zeitlich konstanten Konzentration der Zielkomponente ausgeleitet werden kann, so sollen hierunter alle Maßnahmen subsummiert werden, die der Fachmann üblicherweise anwenden wird, um einen solchen zeitlichen und/oder örtlichen Konzentrationsausgleich herbeizuführen. Beispiele hierzu sind das Vorsehen einer Mischvorrichtung, beispielsweise eines Rührers oder statischen Mischers im zweiten Zwischenbehälter. Alternativ kann das Einleiten des beladenen Waschmittels vom ersten in den zweiten Zwischenbehälter mit hohem Impuls erfolgen, so dass die dem Einleitungsstrom aufgeprägte Turbulenz zu der erwünschten Vermischung führt.

Unter Druckausgleich soll nicht ausschließlich das Herbeiführen völliger Druckgleichheit in den kommunizierenden Bereichen, sondern im weiteren Sinne auch ein Aufeinanderzubewegen der Drücke in diesen Bereichen verstanden werden, ohne dass am Ende des Vorgangs völlige Druckgleichheit erreicht wird.

Etwaige Druckangaben in der Einheit bar(a) beziehen sich auf den Absolutdruck in bar, absolut, sofern nicht im Einzelfall anders angegeben.

Der Erfindung liegt die Erkenntnis zugrunde, dass es vorteilhaft ist, den hohen Mengenstrom an Waschmittel, der für eine sichere Aufnahme der Zielkomponente in der Gaswaschvorrichtung benötigt wird, nicht während der gesamten Betriebsdauer des Verfahrens, sondern nur während der Zeitdauer zur Verfügung zu stellen, während der der Peak der Zielkomponente in die Gaswaschvorrichtung eintritt.

Dazu wird erfindungsgemäß das aus dem Stand der Technik bekannte Fließschema um einen Behälter für stark mit der Zielkomponente beladenes Waschmittel ergänzt. Der bereits gemäß DE 10 2005 059 101 A1 vorhandene Behälter stromabwärts der Gaswaschvorrichtung, beispielsweise der Absorptionskolonne, wird zur Speicherung von schwach mit der Zielkomponente beladenem Waschmittel verwendet (zweiter Zwischenbehälter).

Kurz vor, während und kurz nach dem Eintreten des Peaks der Zielkomponente in die Gaswaschvorrichtung wird das mit der Zielkomponente beladene Waschmittel in den Behälter für stark mit der Zielkomponente beladenes Waschmittel eingeleitet (erster Zwischenbehälter). Diese Phase dauert unter typischen Verfahrensbedingungen beispielsweise eine Stunde.

Nach dem Ende des Peaks wird das beladene Waschmittel von der Gaswaschvorrichtung zu dem Behälter für schwach mit der Zielkomponente beladenes Waschmittel geleitet (zweiter Zwischenbehälter). Parallel dazu wird der Behälter für stark mit der Zielkomponente beladenes Waschmittel entleert und sein Inhalt ebenfalls dem Behälter für schwach mit der Zielkomponente beladenes Waschmittel zugegeben, wobei sich das schwach und das stark beladene Waschmittel vermischen. Die Vermischung kann noch dadurch verstärkt werden, dass in oder an dem Behälter für schwach mit der Zielkomponente beladenes Waschmittel Vermischungsvorrichtungen wie z. B. Rührer, statische Mischer, Leitbleche vorgesehen werden und/oder das stark mit der Zielkomponente beladene Waschmittel mit Turbulenz in den Behälter eingeleitet wird. Auf diese Weise wird in den Anlagenteilen, die dem Behälter für schwach mit der Zielkomponente beladenes Waschmittel nachgeschaltet sind, ein im Vergleich zu dem Peak-Verlauf in der Absorptionskolonne zeitlich weniger stark fluktuierender Konzentrationsverlauf erhalten. Im Extremfall, also bei idealer Rückvermischung in dem Behälter, ist die Konzentration der Zielkomponente in dem den Behälter verlassenden Waschmittelstrom zeitlich konstant.

Dieser Waschmittelstrom wird dann von dem Behälter für schwach mit der Zielkomponente beladenes Waschmittel zu der Waschmittelregenerierungsvorrichtung geleitet. Da das Waschmittel eine stabilere, zeitlich weniger schwankende Konzentration der Zielkomponente aufweist, z. B. einen konstanteren Mercaptangehalt besitzt, wird in der Waschmittelregenerierungsvorrichtung ein Abgas mit stabilerer Zusammensetzung erzeugt, das an nachgeschaltete Verfahrensstufen abgegeben werden kann. Dies kann im Falle von Mercaptanen als Zielkomponente beispielweise eine Schwefelrückgewinnungsstufe nach dem Claus-Verfahren sein.

### Bevorzugte Ausgestaltungen der Erfindung

Als besonders vorteilhaft hat es sich herausgestellt, wenn der erste Druck kleiner oder gleich, bevorzugt gleich dem in der Gaswaschvorrichtung herrschenden Druck ist und dass der zweite Druck kleiner oder gleich dem ersten Druck ist. Hierdurch wird ein Ausflashen der Zielkomponente verringert oder vermieden; andererseits wird durch das Druckgefälle die Weiterförderung des beladenen Waschmittels von der Gaswaschvorrichtung in den ersten Zwischenbehälter unterstützt. Zur weiteren Unterstützung der Weiterförderung des beladenen Waschmittels können zudem zusätzliche Fördervorrichtungen, z. B. Pumpen, vorgesehen werden und/oder die entsprechenden Verbindungsleitungen mit Gefälle verlegt werden.

Bevorzugt wird der Behälter für stark mit der Zielkomponente beladenes Waschmittel mit dem gleichen Druck wie die Gaswaschvorrichtung betrieben, um ein Ausflashen der Zielkomponente zu verhindern. Der Behälter für schwach mit der Zielkomponente beladenes Waschmittel wird bevorzugt mit einem niedrigeren Druck betrieben und etwaige Flashgase werden zu der Waschmittelregenerierungsvorrichtung geleitet.

In einem Aspekt des erfindungsgemäßen Verfahrens ist die Zielkomponente mindestens eine Schwefelverbindung, ausgewählt aus der folgenden Gruppe ist: Mercaptane, Schwefelwasserstoff, Carbonylsulfid, Gesamtschwefelgehalt als Summenparameter. Die genannten Verbindungen treten beispielsweise in Erdgasen oder Rohsynthesegas als unerwünschte Begleitstoffe auf. Unerwünscht sind sie insbesondere deshalb, weil sie bei nachgeschalteten Weiterverarbeitungsstufen als Störkomponente wirken, da sie unter anderem Katalysatorgifte in katalytischen Verfahren darstellen. Einige Analysenverfahren bestimmen den Gesamtschwefelgehalt als Summenparameter; in diesen Fällen wird darauf abgestellt, mittels des erfindungsgemäßen Verfahrens diesen Gesamtschwefelgehalt zu reduzieren.

In bevorzugter Verfahrensausgestaltung wird das Sorptionsmittel bei der sorptiven Reinigung eines Erdgasstroms oder eines Synthesegasstroms mit der Zielkomponente beladen. Diese Verfahrensausgestaltung bezieht sich demnach insbesondere auf die Nachbehandlung eines Regenerierungsabgasstroms durch Gaswäsche mit einem Waschmittel, wobei der Regenerierungsabgasstroms von einem Sorptionsmittel, beispielsweise einem Adsorptionsmittel freigesetzt wird, die bei der Reinigung von Erdgas oder Synthesegas mit schwefelhaltigen Komponenten, beispielsweise mit Mercaptanen, beladen wurde.

In weiterer bevorzugter Verfahrensausgestaltung enthält das Waschmittel eine oder mehrere Komponenten ausgewählt aus der folgenden Gruppe: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether. Die genannten Komponenten sind einzeln oder in Mischung als physikalisch wirkende Waschmittel zur Abtrennung vieler Zielkomponenten geeignet, insbesondere auch von Schwefelkomponenten wie Mercaptanen.

Eine weitere, bevorzugte Verfahrensausgestaltung ist dadurch gekennzeichnet, dass der erste Druck größer als der zweite Druck ist und dass das Entleeren des mit der Zielkomponente beladenen Waschmittels aus dem ersten Zwischenbehälter in den zweiten Zwischenbehälter durch Druckausgleich erfolgt. Durch das Druckgefälle wird die Weiterförderung des beladenen Waschmittels von der Gaswaschvorrichtung in den ersten Zwischenbehälter unterstützt. Zur weiteren Unterstützung der Weiterförderung des beladenen Waschmittels können zudem zusätzliche Fördervorrichtungen, z. B. Pumpen, vorgesehen werden und/oder die entsprechenden Verbindungsleitungen mit Gefälle verlegt werden. Eventuell aufgrund der Druckabnahme desorbierte, also ausgeflashte Anteile der Zielkomponente werden gemeinsam mit dem beladenen Waschmittel aus dem zweiten Zwischenbehälter zu der Waschmittelregenerierungsvorrichtung geleitet.

In einem weiteren Aspekt des erfindungsgemäßen Verfahrens entsteht durch das Zurückführen des mindestens teilweise von der Zielkomponente befreiten Waschmittels zu der Gaswaschvorrichtung ein Waschmittelkreislauf, wobei der Volumenstrom des Waschmittels im Waschmittelkreislauf dem zweiten Volumenstrom entspricht. Der zweite Volumenstrom stellt demnach die Grundlast des Gaswaschverfahrens sicher, wohingegen der erste Volumenstrom für die Spitzenlast zur Verfügung steht, wenn ein Peak der Zielkomponente in die Gaswaschvorrichtung eintritt.

Bevorzugt wird das erfindungsgemäße Verfahren so ausgestaltet, dass für Zeiten vor tv und nach tn das zurückgeführte Waschmittel vor Eintritt in die Gaswaschvorrichtung durch einen dritten Zwischenbehälter strömt und diesen befüllt, wobei das im dritten Zwischenbehälter zwischengespeicherte Waschmittel für Zeiten zwischen tv und tn zu der Gaswaschvorrichtung geführt wird. Somit ergibt sich der erste Volumenstrom aus der Summe des zweiten, kontinuierlich umlaufenden Volumenstroms und der durch Entleeren des dritten Zwischenbehälters erzeugten Zusatzstrom, der für die Zeitdauer zwischen tv und tn zur Verfügung gestellt wird, wenn also ein Peak der Zielkomponente in die Gaswaschvorrichtung eintritt.

In Weiterbildung des Verfahrens gemäß der Erfindung wird der die organische Schwefelverbindung als Zielkomponente enthaltende, aus der Waschmittelregenerierungsvorrichtung ausgeleitete Stoffstrom in eine Anlage zur Schwefelgewinnung nach dem Claus-Verfahren eingeleitet. Bei dem Claus-Verfahren handelt es sich um ein an sich bekanntes und bewährtes Verfahren zur Schwefelgewinnung. Der aus der abgetrennten Zielkomponente gewonnene Schwefel fällt somit als Wertstoff an.

### Ausführungsbeispiel

Weitere Merkmale, Vorteile und Anwendungsmöglichkeiten der Erfindung ergeben sich auch aus der nachfolgenden Beschreibung von Ausführungsbeispielen und den Zeichnungen. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: ein Blockfliessbild einer Adsorptionseinheit zur Mercaptanentfernung aus Erdgas mit nachgeschalteter Reinigung des Regenerierungsabgases,
- Fig. 2: eine schematische Darstellung eines Verfahrens zur Reinigung des Regenerierungsabgases gemäß Stand der Technik,
- Fig. 3: eine schematische Darstellung einer bevorzugten Ausgestaltung des erfindungsgemäßen Verfahrens bzw. einer entsprechenden Anlage.

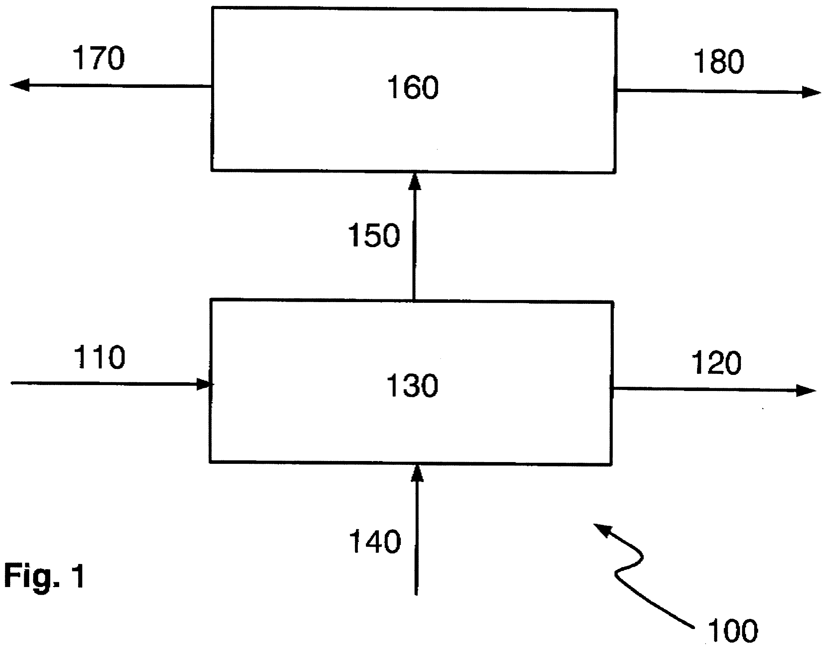

Fig. 1 zeigt schematisch ein Blockfliessbild einer Adsorptionseinheit 100 zur Mercaptanentfernung aus Erdgas mit nachgeschalteter Reinigung des Regenerierungsabgases. Über Leitung 110 wird dem Adsorber 130 mercaptanhaltiges Erdgas zugeführt. Das Erdgas wurde zuvor in einer Dehydratisierungseinheit zur Einstellung seines Taupunktes behandelt. Der Adsorber ist mit einem handelsüblichen Adsorptionsmittel auf Basis von Molekularsieb gefüllt. Über Leitung 120 wird das von Mercaptanen befreite Erdgas aus dem Adsorber ausgeleitet und der weiteren Behandlung bzw. Verarbeitung zugeführt.

Wenn der Adsorber bis zu seiner Kapazitätsgrenze mit Mercaptanen beladen ist, wird das Zuführen von Erdgas über Leitung 110 beendet und über Leitung 140 der Adsorber mit einem Regenerierungsgas, beispielsweise Stickstoff oder gereinigtes Erdgas, beaufschlagt. Parallel dazu wird zumeist die Temperatur des beladenen Adsorbens mittels einer Heizvorrichtung erhöht, um die Desorption der Mercaptane zu beschleunigen. Auch der Regenerierungsgasstrom kann zu diesem Zweck vorgeheizt werden. Die adsorptive Behandlung des Erdgases wird während der Regenerierung in parallel geschalteten, bildlich nicht dargestellten Adsorptionseinheiten durchgeführt, da solche Anlagen zumeist mehrsträngig ausgeführt werden. Üblich sind Einheitenverbünde von z. B. drei bis sechs parallel geschalteten Adsorptionseinheiten. Der Regenerationszyklus schließt typischerweise die folgenden Betriebsstufen ein: (a) Druckabsenkung, (b) Beaufschlagen des beladenen Adsorbens mit Regenerierungsgas, (c) Aufheizen auf Haltetemperatur, (d) Spülen mit Regenerierungsgas bei der Haltetemperatur, (e) Abkühlen, (f) Druckerhöhung auf Adsorptionsdruck, (g) Beaufschlagen mit Erdgas.

Das beladene Regenerierungsgas, das aus dem erwärmten Adsorbens austritt, wird beispielsweise zu einem Luftkühler geleitet, wo es z. B. auf 60 °C abgekühlt wird. Es wird weiter zu einem Abscheider geleitet, um die Kohlenwasserstoffphase und die wässrige Phase zu trennen. Nach der Aufheizphase, in der die Mercaptane als Peak entfernt werden, wird das Adsorbens ferner mit erhitztem Regenerierungsgas gespült, um Spurenbestandteile zu entfernen, die mehr Zeit für die Desorption benötigen. Schließlich wird das Adsorbens durch Einleiten von kaltem Regenerierungsgas durch den regenerierten Adsorber abgekühlt. Nach dem Abkühlen wird der Adsorber erneut unter Druck gesetzt. Sodann ist das Adsorbens ist für den Adsorptionsmodus bereit und es beginnt der nächste Zyklus.

Über Leitung 150 wird der mit den desorbierten Mercaptanen beladene Regenerierungsgasstrom in die Gaswaschvorrichtung mit nachgeschalteter Waschmittelregenerierungsvorrichtung 160 eingeleitet. Die Gaswaschvorrichtung ist im vorliegenden Ausführungsbeispiel nach dem Purisol-Verfahren ausgestaltet, wobei die Mercaptane aus dem Regenerierungsgas mit einem NMP enthaltenden Waschmittel abgeschieden werden.

Über Leitung 170 wird ein von Mercaptanen befreites Regenerierungsgas abgeführt und beispielsweise einem Brenngasgemisch zugeschlagen. Über Leitung 180 wird ein an Mercaptanen angereicherter Gasstrom abgeführt und zu einer Schwefelgewinnungsanlage geleitet, die nach dem Claus-Verfahren arbeitet.

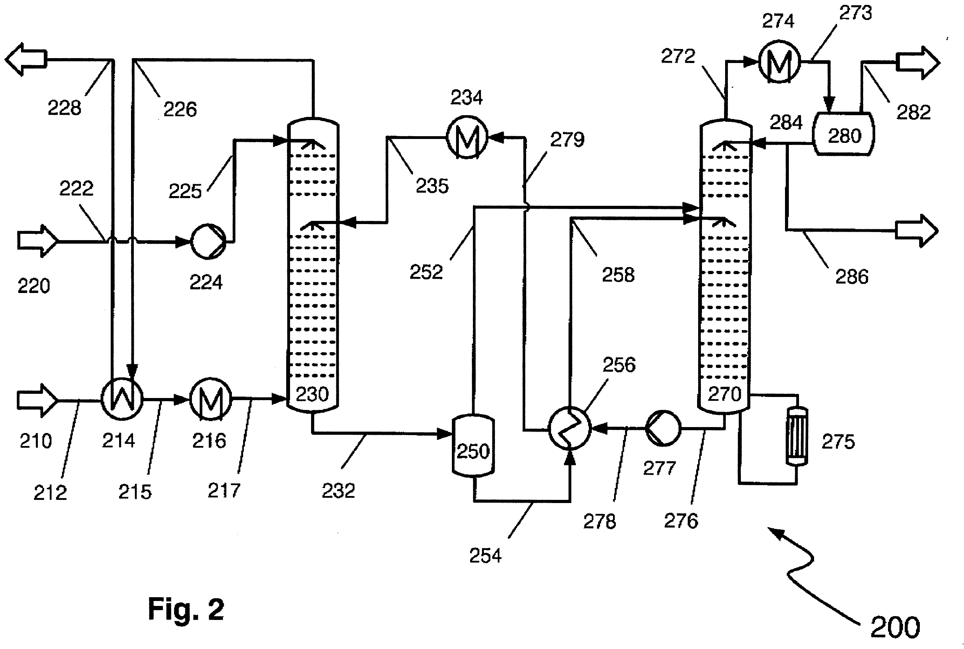

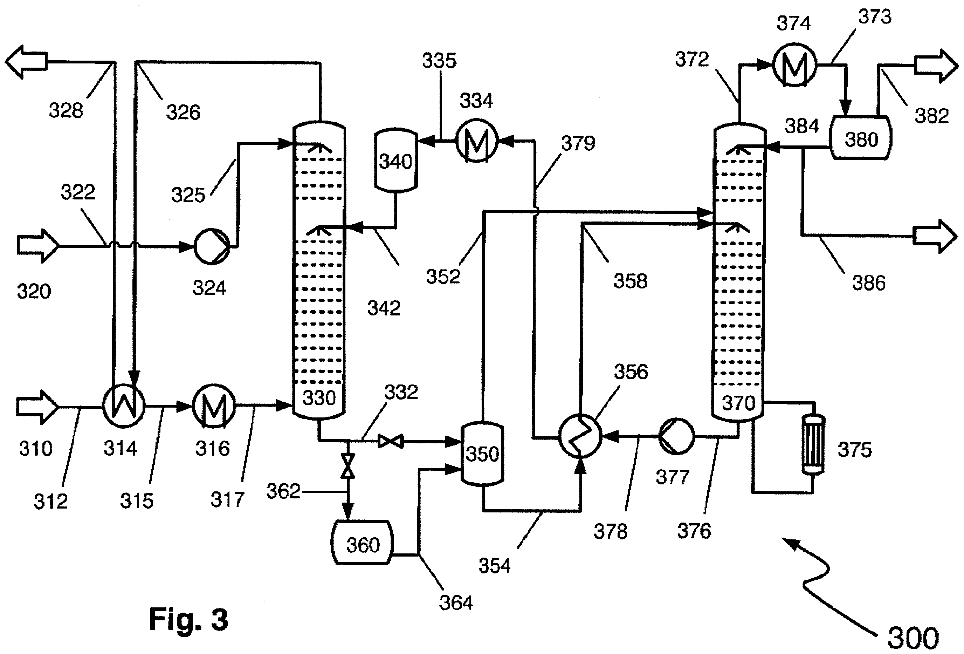

Die Ausgestaltung der Vorrichtung gemäß Bezugszeichen 160, die Gaswaschvorrichtung mit nachgeschalteter Waschmittelregenerierungsvorrichtung, ist Gegenstand der vorliegenden Erfindung. Diese Ausgestaltung wird in Fig. 2 (Stand der Technik) und Fig. 3 (Erfindung) näher erläutert.

Fig. 2 zeigt eine schematische Darstellung eines Verfahrens bzw. einer entsprechenden Anlage zur Reinigung des Regenerierungsabgases gemäß Stand der Technik, beispielsweise gemäß DE 10 2005 059 101 A1.

In Fig. 2 wird eine Anlage 200 gezeigt, die eine Gaswaschvorrichtung mit nachgeschalteter Waschmittelregenerierungsvorrichtung umfasst. Über Eintrittspunkt 210 und Leitungen 212, 215, 217 wird das mit Mercaptanen beladene Regenerierungsabgas zu der Gaswaschvorrichtung 230 geführt und in diese an deren unterem Ende eingeleitet. Zuvor wird das Regenerierungsabgas in den Wärmetauschern 214 (gegen kaltes, gereinigtes Regenerierungsgas) und 216 abgekühlt.

Das mit Mercaptanen beladene Regenerierungsabgas durchläuft die Gaswaschvorrichtung, die als Absorptionskolonne ausgestaltet ist, von unten nach oben und trifft dabei im Gegenstrom auf das NMP enthaltende Waschmittel, das über Leitung 235 in die Gaswaschvorrichtung eingeleitet und über den angedeuteten Flüssigkeitsverteiler über deren Querschnitt verteilt wird. Zusätzlich wird im oberen Bereich der Gaswaschvorrichtung über Leitung 225 und einen weiteren Flüssigkeitsverteiler demineralisiertes Wasser in eingeführt, das über Eintrittspunkt 220, Leitung 222 und Pumpe 224 herangeführt wird und dazu dient, mitgerissene Waschmittelrückstände aus dem gereinigten Regenerierungsabgas zu entfernen. Über Leitung 226 und 228 wird das gereinigte und von Waschmittelrückständen befreite Regenerierungsabgas aus dem Verfahren ausgeleitet und nachfolgend beispielsweise einem Brenngasgemisch zugeschlagen oder erneut als Regenerierungsgas oder zu einem anderen Zweck genutzt. Zuvor wird es im Wärmetauscher 214 im indirekten Wärmetausch gegen mit Mercaptanen beladenes Regenerierungsabgas aufgeheizt. Der Restschwefelgehalt im gereinigten Regenerierungsabgas beträgt typischerweise weniger als 5 ppmV.

Aus dem Sumpf der Gaswaschvorrichtung (Absorptionskolonne) wird über Leitung 232 das mit Mercaptanen beladene Waschmittel ausgeleitet und zu dem Zwischenbehälter 250 geführt. Dieser ist im vorliegenden Ausführungsbeispiel für eine Verweilzeit von etwa sechs Stunden ausgelegt, was einem Regenerierungszyklus für die Adsorber in der Adsorptionseinheit 130 entspricht. Das Zwischenspeichern des beladenen Waschmittels gleicht die Schwankungen der Beladung des Waschmittels mit Mercaptanen aus, die durch die Regenerierungszyklen und die dabei fluktuierenden Größen wie Druck, Temperatur und Mercaptankonzentration verursacht werden. Ohne einen solchen Ausgleich käme es zu starken Schwankungen in dem aus der Waschmittelregenerierung abgeführten Sauergas und nachfolgend auch zu Betriebsstörungen in der stromabwärts der Waschmittelregenerierungsvorrichtung gelegenen Schwefelgewinnungsanlage.

Über Leitung 254 wird zwischengespeichertes, mit Mercaptanen beladenes Waschmittel aus dem Zwischenbehälter ausgeleitet und nach Erhitzen im Wärmetauscher 256 über Leitung 258 und den angedeuteten Flüssigkeitsverteiler in den oberen Bereich der Waschmittelregenerierungsvorrichtung 270 eingeleitet, die als Destillationskolonne ausgestaltet ist. Etwaige, durch Ausflashen im Zwischenbehälter erhaltene Gase werden über Leitung 252 ebenfalls in die Waschmittelregenerierungsvorrichtung eingeleitet.

In der Waschmittelregenerierungsvorrichtung erfolgt die Regenerierung des mit Mercaptanen beladenen Waschmittels durch Erhitzen. Hierzu wird der Kolonne 270 über Aufkocher 275 Energie zugeführt. Die hierdurch desorbierten Gase werden über Leitung 272 ausgeleitet und die kondensierbaren Anteile durch Abkühlen mittels Wärmetauscher 274 kondensiert, über Leitung 273 ausgeleitet und in Behälter 280 aufgefangen. Die gasförmigen Anteile, die auch die Mercaptane umfassen, werden über Leitung 282 aus dem Verfahren ausgeleitet und können beispielsweise einer nachgeschalteten Anlage zur Schwefelgewinnung zugeführt werden. Über Leitung 284 wird ein Teil des Kondensats als Rücklauf zu der Waschmittelregenerierungsvorrichtung zurückgeführt und ein anderer Teil des Kondensats über Leitung 286 aus dem Verfahren ausgeleitet.

Aus dem Sumpf der als Destillationskolonne ausgestalteten Waschmittelregenerierungsvorrichtung 270 wird über Leitung 276, Pumpe 277 und Leitung 278 das regenerierte Waschmittel ausgeleitet und im Wärmetauscher 256 im indirekten Wärmetausch gegen kaltes, beladenes Waschmittel vorgekühlt. Das vorgekühlte, regenerierte Waschmittel wird über Leitung 279 und 235 zu der Gaswaschvorrichtung 230 zurückgeführt und über einen Flüssigkeitsverteiler in diese eingebracht, wobei vor Einleiten in die Gaswaschvorrichtung mittels Wärmetauscher 234 eine weitere Abkühlung des Waschmittels erfolgt.

Fig. 3 zeigt eine schematische Darstellung eines Verfahrens bzw. einer entsprechenden Anlage gemäß einer bevorzugten Ausgestaltung der vorliegenden Erfindung. Dabei entsprechen Anlagenteile mit dem Bezugszeichen 3nn denjenigen der Fig. 2 mit 2nn bezeichneten. Neu hinzu treten der Behälter 360 (erster Zwischenbehälter), der der Aufnahme des mit Mercaptanen beladenen Waschmittels während des Eintretens des Mercaptan-Peaks in die Gaswaschvorrichtung dient. Ferner tritt der Behälter 340 hinzu (dritter Zwischenbehälter), der zur Zwischenspeicherung eines Vorrats an regeneriertem Waschmittel dient, wobei der Behälter 340 während des Eintretens des Mercaptan-Peaks in die Gaswaschvorrichtung in diese entleert wird und auf diese Weise einen größeren Mengenstrom an regeneriertem Waschmittel sicherstellt. Ferner treten die entsprechenden Verbindungsleitungen 362, 364 und 342 hinzu.

Das erfindungsgemäße Verfahren beruht darauf, dass der Mengenstrom an regeneriertem Waschmittel direkt an das Freisetzen des Mercaptan-Peaks bei der Regenerierung des beladenen Adsorbens gekoppelt ist. Während des Aufheizens des Adsorbens während der Regenerierung beschleunigt sich die Desorption der Mercaptane, die infolge dessen als Peak an das Regenerierungsabgas abgegeben werden. Daher wird dann der Mengenstrom an regeneriertem Waschmittel zu der Gaswaschvorrichtung erhöht, so dass das NMP-haltige Waschmittel den Mercaptan-Peak im Regenerierungsabgas sicher absorbieren kann.

Das mit Mercaptanen beladene Waschmittel, das am Boden bzw. im Sumpf der Gaswaschvorrichtung entnommen wird, wird dann über entsprechendes Betätigen der angedeuteten Absperrventile zum ersten Zwischenbehälter 360 geleitet, der sich bei demselben Druck befindet wie die Gaswaschvorrichtung. Behälter 360 ist für eine Beschickungszeit unter normalen Strömungsverhältnissen von etwa einer Stunde ausgelegt. Erfahrungsgemäß dauert der Mercaptan-Peak unter üblichen Regenerierungsbedingungen etwa 20 bis 30 Minuten an. Um Schwankungen hinsichtlich der Peakdauer und Elutionszeit zu berücksichtigen, wird der Mengenstrom an regeneriertem Waschmittel zu der Gaswaschvorrichtung bereits einige Minuten vor dem aufgrund von Berechnungen bzw. Vorversuchen erwarteten Eintreten des Mercaptan-Peaks in die Gaswaschvorrichtung erhöht, ferner wird der erhöhte Mengenstrom für eine ebenfalls durch Vorversuche ermittelte Nachlaufzeit aufrechterhalten.

Alternativ kann der Mercaptangehalt in dem Regenerierungsabgas mittels Online-Analysenmethoden gemessen werden und als ein Indikator für die erforderliche Anpassung des Waschmittel-Mengenstroms genutzt werden.

Während der übrigen Zeitdauer des Regenerierungszyklus des Adsorbens ist die Mercaptan-Konzentration im Regenerierungsabgas viel niedriger oder gar zu vernachlässigen, so dass der Mengenstrom an regeneriertem Waschmittel zu der Gaswaschvorrichtung verringert werden kann. Während dieses Zeitraums wird das beladenen Waschmittel, das am Boden der Gaswaschvorrichtung entnommen wird, zum zweiten Zwischenbehälter 350 geleitet. In diesem wird das niedrig beladene Waschmittel mit einem Teil des im ersten Zwischenbehälter 360 gespeicherten, höher beladenen Waschmittel vermischt. Dies erfolgt bevorzugt unter Strömungskontrolle, so dass Behälter 360 langsam entleert wird und sodann zur Wiederbefüllung während des Durchlaufens des nächsten Mercaptan-Peaks in dem sich anschließenden Regenerierungszyklus bereitsteht.

Behälter 350 befindet sich bevorzugt auf einem niedrigeren Druckniveau, so dass keine Pumpe zum Fördern von beladenem Waschmittel aus Behälter 360 in Behälter 350 erforderlich ist. Etwaige durch Ausflashen freigesetzte Gase werden über Leitung 352 direkt zu der Waschmittelregenerierungsvorrichtung 370 geleitet.

Während des Durchlaufens des Mercaptan-Peaks durch die Gaswaschvorrichtung wird Behälter 350 nicht aus der Gaswaschvorrichtung befüllt. Aus diesem Grund dient Behälter 350 auch als Puffergefäß für die kontinuierlich arbeitende Waschmittelregenerierungsvorrichtung und ist beispielsweise für eine einstündige Pufferzeit ausgelegt. Daher beginnt in dieser Phase das Flüssigkeitsniveau im Behälter 350 zu sinken, es steigt aber nach dem Ende des Durchlaufens des Mercaptan-Peaks durch die Gaswaschvorrichtung wieder an.

Die Mischung aus schwach und stark beladenem Waschmittel wird aus Behälter 350 ausgeleitet, im Wärmetauscher 356 vorgewärmt und schließlich zum mittleren Abschnitt der als Destillationskolonne bzw. Strippkolonne ausgestalteten Waschmittelregenerierungsvorrichtung geleitet. Die durch Flashen im Behälter 350 freigesetzten, gasförmigen Mercaptane werden über Leitung werden ebenfalls zu der Waschmittelregenerierungsvorrichtung geführt und oberhalb des Zugabepunktes für das beladene Waschmittel in diese eingeleitet.

In der Waschmittelregenerierungsvorrichtung wird die Regenerierung mittels Dampfstrippen erreicht. Dazu wird Dampf mittels des Aufkochers 275 erzeugt, wobei Mitteldruckdampf als Heizmedium verwendet wird. Die Boden- bzw. Sumpftemperatur der Waschmittelregenerierungsvorrichtung wird dadurch geregelt, dass über bildlich nicht dargestellte Leitungen definierte Mengen an demineralisiertem Wasser in diese hinein und Prozesswasser aus dieser heraus geleitet werden.

Das Kopfprodukt der Waschmittelregenerierungsvorrichtung umfasst das abgestrippte Mercaptangas (Sauergas) mit einem beträchtlichen Wassergehalt. Es wird mittels Wärmetauscher 374 auf 40 °C abgekühlt gekühlt und das dabei erzeugte, stark wasserhaltige Kondensat über Leitung 373 ausgeleitet und in Behälter 380 aufgefangen. Eine Drahtgeflechtpackung in Behälter 380 dient zur Entfernung von Tröpfchen aus dem die Mercaptane enthaltenden Sauergas, das Behälter 380 über Leitung 382 verlässt und zu der bildlich nicht dargestellten Schwefelgewinnungsanlage geführt wird.

Das in dem mit einer Niveauregelung versehenen Behälter 380 gesammelte, stark wasserhaltige Kondensat wird in den oberen Teil der Waschmittelregenerierungsvorrichtung als Rücklauf zurückgeführt. Es dient dort als Waschmittel zur Minimierung der Waschmittelverluste, beispielsweise des NMP, mit dem gestrippten Gasstrom.

Aus dem Sumpf der Waschmittelregenerierungsvorrichtung 370 wird über Leitung 376, Pumpe 377 und Leitung 378 das regenerierte Waschmittel ausgeleitet und im Wärmetauscher 356 im indirekten Wärmetausch gegen kaltes, beladenes Waschmittel vorgekühlt. Gegebenenfalls kann dem regenerierten Waschmittel ein Antischaummittel zugegeben werden, um ein Schäumen in der Gaswaschvorrichtung zu verhindern bzw. zu reduzieren. Das vorgekühlte, regenerierte Waschmittel wird im Wärmetauscher 334 gekühlt und über Leitung 379 und 335 zum dritten Zwischenbehälter 340 geleitet.

Der dritte Zwischenbehälter 340 dient als Puffergefäß zur Zwischenspeicherung regenerierten Waschmittels, um einen erhöhten Waschmittel-Mengenstrom beim Durchlaufen des Mercaptan-Peaks durch die Gaswaschvorrichtung sicherstellen zu können. Dabei beginnt das Niveau in Behälter 340 abzusinken. Während der sich anschließenden, peakfreien Phase steigt das Niveau in Behälter 340 wieder an.

Es kann sinnvoll sein, eine bildlich nicht dargestellte Bypassleitung um den Behälter 340 herum zu führen, damit das regenerierte Waschmittel im Bedarfsfall ohne Zwischenspeicherung direkt in die Gaswaschvorrichtung eingeleitet werden kann.

### Gewerbliche Anwendbarkeit

Mit der Erfindung wird ein Verfahren und eine Anlage zum Reduzieren der Größe einer Regenerierungsabgasbehandlungseinheit vorgestellt. Das Verfahren umfasst eine waschmittelbasierte Behandlung eines Regenerierungsabgasstroms, der von einer Adsorptionseinheit freigesetzt wird, wobei der Regenerierungsabgasstrom durch eine zeitliche Schwankung der Menge und/oder Konzentration der unerwünschten Komponente, beispielsweise der Schwefelkomponenten, gekennzeichnet ist und diese insbesondere als Peak aus der Adsorptionseinheit desorbiert werden. Erfindungsgemäß wird dazu während des Eintretens des Desorptionspeaks in die Gaswaschvorrichtung die Waschmittelmenge während einer ersten Phase von einem Normalwert ausgehend erhöht und nach dem Ende des Desorptionspeaks die Waschmittelmenge während einer zweiten Phase wieder auf den Normalwert zurückgeführt, wobei die beladenen Waschmittel während der beiden Phasen in verschiedenen Zwischenbehältern aufgefangen, vermischt und als Mischung an eine nachgeschaltete Waschmittelregenerierungsvorrichtung abgegeben werden. Mit der Erfindung kann demnach die Größe des aus dem Stand der Technik bekannten Zwischenbehälters reduziert werden, da dieser nicht mehr die Gesamtmenge des während eines Regenerierungszyklus anfallenden, beladenen Waschmittels aufnehmen muss.

### Bezugszeichenliste

- 100: Adsorptionseinheit mit Reinigung des Regenerierungsabgases
- 110: Leitung
- 120: Leitung
- 130: Adsorber
- 140: Leitung
- 150: Leitung
- 160: Gaswaschvorrichtung mit Waschmittelregenerierungsvorrichtung
- 170: Leitung
- 180: Leitung

- x00: Gaswaschvorrichtung mit Waschmittelregenerierungsvorrichtung
- x10: Eintrittspunkt
- x12: Leitung
- x14: Wärmetauscher
- x15: Leitung
- x16: Wärmetauscher
- x17: Leitung
- x20: Eintrittspunkt
- x22: Leitung
- x24: Pumpe
- x25: Leitung
- x26: Leitung
- x28: Leitung
- x30: Gaswaschvorrichtung
- x32: Leitung
- x34: Wärmetauscher
- x35: Leitung
- x50: zweiter Zwischenbehälter
- x52: Leitung

- x54: Leitung
- x56: Wärmetauscher
- x58: Leitung
- x70: Waschmittelregenerierungsvorrichtung
- x72: Leitung
- x73: Leitung
- x74: Wärmetauscher
- x75: Aufkocher
- x76: Leitung
- x77: Pumpe
- x78: Leitung
- x79: Leitung
- x80: Behälter
- x82: Leitung
- x84: Leitung
- x86: Leitung
(x = 2: Stand der Technik, x = 3: Erfindung)
- 340: dritter Zwischenbehälter
- 342: Leitung
- 360: erster Zwischenbehälter
- 362: Leitung
- 364: Leitung

## Patentansprüche

1. Verfahren (300) zur Reinigung eines Regenerierungsabgases, das bei der Regenerierung eines mit einer Zielkomponente beladenen Sorptionsmittels durch Überleiten oder Hindurchleiten eines Spülgases erhalten wird,
umfassend folgende Verfahrensschritte:
(a) Bereitstellen des mit der Zielkomponente beladenen Sorptionsmittels und des Spülgases,
(b) Einleiten des Spülgases als kontinuierlicher Spülgasstrom in einen das beladene Sorptionsmittel enthaltenden Sorptionsmittelbehälter und Ausleiten des mit der Zielkomponente beladenen Spülgasstroms als Regenerierungsabgasstrom aus dem Sorptionsmittelbehälter, wobei die Zielkomponente zeitlich als Peak aus dem Sorptionsmittelbehälter eluiert wird und ein mindestens teilweise regeneriertes Sorptionsmittel erhalten wird,
(c) Einleiten des Regenerierungsabgasstroms in eine Gaswaschvorrichtung (330), Inkontaktbringen des Regenerierungsabgasstroms in der Gaswaschvorrichtung (330) mit einem Waschmittel, Ausleiten des mindestens teilweise von der Zielkomponente befreiten Regenerierungsabgasstroms und des mit der Zielkomponente beladenen Waschmittels aus der Gaswaschvorrichtung (330),
**dadurch gekennzeichnet, dass** während des Eintretens des Peaks der Zielkomponente in die Gaswaschvorrichtung (330) sowie für definierte Zeitdauern tv, tn vor und nach des Eintretens des Peaks der Zielkomponente in die Gaswaschvorrichtung (330) der Regenerierungsabgasstrom mit einem ersten Volumenstrom des Waschmittels in Kontakt gebracht wird und das mit der Zielkomponente beladene Waschmittel bei einem ersten Druck in einem ersten Zwischenbehälter (360) gespeichert wird und dass für Zeiten vor tv und nach tn der Regenerierungsabgasstrom mit einem zweiten Volumenstrom des Waschmittels in Kontakt gebracht wird und das mit der Zielkomponente beladene Waschmittel bei einem zweiten Druck in einem zweiten Zwischenbehälter (350) gespeichert wird,
wobei:
- der erste Volumenstrom größer als der zweite Volumenstrom ist,
- für Zeiten vor tv und nach tn das mit der Zielkomponente beladene Waschmittel aus dem ersten Zwischenbehälter (360) ausgeleitet und in den zweiten Zwischenbehälter (350) eingeleitet wird, wobei der erste Zwischenbehälter (360) mindestens teilweise entleert wird und wobei das Einleiten in den zweiten Zwischenbehälter (350) so erfolgt, dass aus diesem ein Waschmittelstrom mit einer im Vergleich zum Regenerierungsabgasstrom zeitlich weniger schwankenden, bevorzugt zeitlich konstanten Konzentration der Zielkomponente ausgeleitet werden kann,
- das mit der Zielkomponente beladene Waschmittel kontinuierlich aus dem zweiten Zwischenbehälter (350) ausgeleitet und in eine Waschmittelregenerierungsvorrichtung (370) eingeleitet wird, wobei aus der Waschmittelregenerierungsvorrichtung (370) ein mindestens teilweise von der Zielkomponente befreites Waschmittel ausgeleitet und zu der Gaswaschvorrichtung (330) zurückgeführt wird und wobei ferner aus der Waschmittelregenerierungsvorrichtung (370) ein die Zielkomponente enthaltender Stoffstrom ausgeleitet wird.

2. Verfahren nach Anspruch 1, **dadurch gekennzeichnet, dass** der erste Druck kleiner oder gleich, bevorzugt gleich dem in der Gaswaschvorrichtung (330) herrschenden Druck ist und dass der zweite Druck kleiner oder gleich dem ersten Druck ist.

3. Verfahren nach Anspruch 1 bis 2, **dadurch gekennzeichnet, dass** die Zielkomponente mindestens eine Schwefelverbindung, ausgewählt aus der folgenden Gruppe ist: Mercaptane, Schwefelwasserstoff, Carbonylsulfid, Gesamtschwefelgehalt als Summenparameter.

4. Verfahren nach einem der vorigen Ansprüche, **dadurch gekennzeichnet, dass** das Sorptionsmittel bei der sorptiven Reinigung eines Erdgasstroms oder eines Synthesegasstroms mit der Zielkomponente beladen wurde.

5. Verfahren nach einem der vorigen Ansprüche, **dadurch gekennzeichnet, dass** das Waschmittel eine oder mehrere Komponenten ausgewählt aus der folgenden Gruppe enthält: Methanol, N-Methylpyrrolidon (NMP), sekundäre Amine, vorzugsweise Diethanolamin, tertiäre Amine, vorzugsweise Methyldiethanolamin, Polyethylenglycol-dialkylether, vorzugsweise Polyethylenglycol-dimethylether.

6. Verfahren nach Anspruch 1, **dadurch gekennzeichnet, dass** der erste Druck größer als der zweite Druck ist und dass das Entleeren des mit der Zielkomponente beladenen Waschmittels aus dem ersten Zwischenbehälter (360) in den zweiten Zwischenbehälter (350) durch Druckausgleich erfolgt.

7. Verfahren nach Anspruch 1, **dadurch gekennzeichnet, dass** durch das Zurückführen des mindestens teilweise von der Zielkomponente befreiten Waschmittels zu der Gaswaschvorrichtung (330) ein Waschmittelkreislauf entsteht, wobei der Volumenstrom des Waschmittels im Waschmittelkreislauf dem zweiten Volumenstrom entspricht.

8. Verfahren nach Anspruch 7, **dadurch gekennzeichnet, dass** für Zeiten vor tv und nach tn das zurückgeführte Waschmittel vor Eintritt in die Gaswaschvorrichtung (330) durch einen dritten Zwischenbehälter (340) strömt und diesen befüllt, wobei das im dritten Zwischenbehälter (340) zwischengespeicherte Waschmittel für Zeiten zwischen tv und tn zu der Gaswaschvorrichtung (330) geführt wird.

9. Verfahren nach Anspruch 1 und 3 , **dadurch gekennzeichnet, dass** der die Schwefelverbindung als Zielkomponente enthaltende, aus der Waschmittelregenerierungsvorrichtung ausgeleitete Stoffstrom in eine Anlage zur Schwefelgewinnung nach dem Claus-Verfahren eingeleitet wird.

## Claims

1. Process (300) for cleaning a regeneration offgas which is obtained in the regeneration of a sorbent laden with a target component by passing a purge gas over or through it,
comprising the following process steps:
(a) providing the sorbent laden with the target component and the purge gas,
(b) introducing the purge gas as continuous purge gas stream into a sorbent vessel containing the laden sorbent and discharging the purge gas stream laden with the target component as regeneration offgas stream from the sorbent vessel, wherein the target component is eluted at some juncture as a peak from the sorbent vessel and an at least partly regenerated sorbent is obtained,
(c) introducing the regeneration offgas stream into a gas scrubbing apparatus (330), contacting the regeneration offgas stream with a scrubbing medium in the gas scrubbing apparatus (330), discharging the regeneration offgas stream that has been at least partly freed of the target component and the scrubbing medium laden with the target component from the gas scrubbing apparatus (330), **characterized in that,** during the entry of the peak of the target component into the gas scrubbing apparatus (330) and for defined periods of time tv, tn before and after the entry of the peak of the target component into the gas scrubbing apparatus (330), the regeneration offgas stream is contacted with a first volume flow rate of the scrubbing medium and the scrubbing medium laden with the target component is stored at a first pressure in a first intermediate vessel (360), and **in that**, for periods before tv and after tn, the regeneration offgas stream is contacted with a second volume flow rate of the scrubbing medium and the scrubbing medium laden with the target component is stored at a second pressure in a second intermediate vessel (350),
wherein:
- the first volume flow rate is greater than the second volume flow rate,
- for periods before tv and after tn, the scrubbing medium laden with the target component is discharged from the first intermediate vessel (360) and introduced into the second intermediate vessel (350), wherein the first intermediate vessel (360) is at least partly emptied and wherein the introduction into the second intermediate vessel (350) is effected in such a way that a scrubbing medium stream can be discharged therefrom with a concentration of the target component that varies less over time compared to the regeneration offgas stream and is preferably constant with time,
- the scrubbing medium laden with the target component is continuously discharged from the second intermediate vessel (350) and introduced into a scrubbing medium regeneration apparatus (370), wherein a scrubbing medium at least partly freed of the target component is discharged from the scrubbing medium regeneration apparatus (370) and recycled to the gas scrubbing apparatus (330), and wherein a stream of matter comprising the target component is also discharged from the scrubbing medium regeneration apparatus (370).

2. Process according to Claim 1, **characterized in that** the first pressure is less than or equal to, preferably equal to, the pressure that exists in the gas scrubbing apparatus (330), and **in that** the second pressure is less than or equal to the first pressure.

3. Process according to Claim 1 or 2, **characterized in that** the target component is at least one sulfur compound selected from the following group: mercaptans, hydrogen sulfide, carbonyl sulfide, total sulfur content as cumulative parameter.

4. Process according to any of the preceding claims, **characterized in that** the sorbent has been laden with the target component in the sorptive cleaning of a natural gas stream or a synthesis gas stream.

5. Process according to any of the preceding claims, **characterized in that** the scrubbing medium comprises one or more components selected from the following group:
methanol, N-methylpyrrolidone (NMP), secondary amines, preferably diethanolamine, tertiary amines, preferably methyldiethanolamine, polyethylene glycol dialkyl ethers, preferably polyethylene glycol dimethyl ether.

6. Process according to Claim 1, **characterized in that** the first pressure is greater than the second pressure, and **in that** the scrubbing medium laden with the target component is emptied from the first intermediate vessel (360) into the second intermediate vessel (350) by balancing of pressure.

7. Process according to Claim 1, **characterized in that** the recycling of the scrubbing medium at least partly freed of the target component to the gas scrubbing apparatus (330) gives rise to a scrubbing medium circuit, wherein the volume flow rate of the scrubbing medium in the scrubbing medium circuit corresponds to the second volume flow rate.

8. Process according to Claim 7, **characterized in that,** for periods before tv and after tn, the recycled scrubbing medium, before entering into the gas scrubbing apparatus (330), flows through and fills a third intermediate vessel (340), wherein the scrubbing medium stored intermediately in the third intermediate vessel (340) is guided to the gas scrubbing apparatus (330) for periods between tv and tn.

9. Process according to Claims 1 and 3, **characterized in that** the stream of matter which comprises the sulfur compound as target component and is discharged from the scrubbing medium regeneration apparatus is introduced into a plant for obtaining sulfur by the Claus process.

## Revendications

1. Procédé (300) pour la purification d'un gaz d'échappement de régénération, qui est obtenu lors de la régénération d'un sorbant chargé avec un composant cible par passage au-dessus ou passage à travers d'un gaz de purge,
comprenant les étapes de procédé suivantes :
(a) la fourniture du sorbant chargé avec le composant cible et du gaz de purge,
(b) l'introduction du gaz de purge sous la forme d'un courant de gaz de purge continu dans un récipient de sorbant contenant le sorbant chargé, et le déchargement du courant de gaz de purge chargé avec le composant cible sous la forme d'un courant de gaz d'échappement de régénération hors du récipient de sorbant, le composant cible étant élué dans le temps sous la forme d'un pic hors du récipient de sorbant et un sorbant au moins partiellement régénéré étant obtenu,
(c) l'introduction du courant de gaz d'échappement de régénération dans un dispositif de lavage de gaz (330), la mise en contact du courant de gaz d'échappement de régénération dans le dispositif de lavage de gaz (330) avec un agent de lavage, le déchargement du courant de gaz d'échappement de régénération au moins partiellement débarrassé du composant cible et de l'agent de lavage chargé avec le composant cible hors du dispositif de lavage de gaz (330),
**caractérisé en ce que,** pendant l'entrée du pic du composant cible dans le dispositif de lavage de gaz (330) ainsi que pendant des durées définies tv, tn avant et après l'entrée du pic du composant cible dans le dispositif de lavage de gaz (330), le courant de gaz d'échappement de régénération est mis en contact avec un premier débit volumique de l'agent de lavage et l'agent de lavage chargé avec le composant cible est stocké à une première pression dans un premier récipient intermédiaire (360) et **en ce que**, pour des temps antérieurs à tv et postérieurs à tn, le courant de gaz d'échappement de régénération est mis en contact avec un deuxième débit volumique de l'agent de lavage et l'agent de lavage chargé avec le composant cible est stocké à une deuxième pression dans un deuxième récipient intermédiaire (350), dans lequel :
- le premier débit volumique est supérieur au deuxième débit volumique,
- pour des temps antérieurs à tv et postérieurs à tn, l'agent de lavage chargé avec le composant cible est déchargé du premier récipient intermédiaire (360) et introduit dans le deuxième récipient intermédiaire (350), le premier récipient intermédiaire (360) étant au moins partiellement vidé et l'introduction dans le deuxième récipient intermédiaire (350) s'effectuant de telle sorte qu'un courant d'agent de lavage ayant une concentration du composant cible variant peu dans le temps, de préférence constante dans le temps, en comparaison du courant de gaz d'échappement de régénération, peut être déchargé de celui-ci,
- l'agent de lavage chargé avec le composant cible est déchargé en continu du deuxième récipient intermédiaire (350) et introduit dans un dispositif de régénération de l'agent de lavage (370), un agent de lavage au moins partiellement débarrassé du composant cible étant déchargé du dispositif de régénération de l'agent de lavage (370) et recyclé vers le dispositif de lavage de gaz (330), et un courant de matière contenant le composant cible étant en outre déchargé du dispositif de régénération de l'agent de lavage (370).

2. Procédé selon la revendication 1, **caractérisé en ce que** la première pression est inférieure ou égale, de préférence égale, à la pression régnant dans le dispositif de lavage de gaz (330) et **en ce que** la deuxième pression est inférieure ou égale à la première pression.

3. Procédé selon les revendications 1 à 2, **caractérisé en ce que** le composant cible est au moins un composé de soufre, choisi dans le groupe suivant : mercaptans, sulfure d'hydrogène, sulfure de carbonyle, teneur totale en soufre en tant que paramètre cumulé.

4. Procédé selon l'une quelconque des revendications précédentes, **caractérisé en ce que** le sorbant a été chargé avec le composant cible lors de la purification par sorption d'un courant de gaz naturel ou d'un courant de gaz de synthèse.

5. Procédé selon l'une quelconque des revendications précédentes, **caractérisé en ce que** l'agent de lavage contient un ou plusieurs composants choisis dans le groupe suivant : méthanol, N-méthylpyrrolidone (NMP), amines secondaires, de préférence diéthanolamine, amines tertiaires, de préférence méthyldiéthanolamine, éthers dialkyliques de polyéthylène glycol, de préférence éther diméthylique de polyéthylène glycol.

6. Procédé selon la revendication 1, **caractérisé en ce que** la première pression est supérieure à la deuxième pression et **en ce que** le vidage de l'agent de lavage chargé avec le composant cible hors du premier récipient intermédiaire (360) dans le deuxième récipient intermédiaire (350) s'effectue par égalisation de pression.

7. Procédé selon la revendication 1, **caractérisé en ce que** le recyclage de l'agent de lavage au moins partiellement débarrassé du composant cible vers le dispositif de lavage au gaz (330) crée un circuit d'agent de lavage, le débit volumique de l'agent de lavage dans le circuit d'agent de lavage correspondant au deuxième débit volumique.

8. Procédé selon la revendication 7, **caractérisé en ce que,** pour des temps antérieurs à tv et postérieurs à tn, l'agent de lavage recyclé s'écoule à travers un troisième récipient intermédiaire (340) et remplit celui-ci avant d'entrer dans le dispositif de lavage de gaz (330), l'agent de lavage entreposé dans le troisième récipient intermédiaire (340) étant acheminé vers le dispositif de lavage de gaz (330) pour des temps compris entre tv et tn.

9. Procédé selon les revendications 1 et 3, **caractérisé en ce que** le courant de matière contenant le composé de soufre en tant que composant cible, déchargé du dispositif de régénération de l'agent de lavage, est introduit dans une installation pour la récupération du soufre selon le procédé Claus.
